# DEMANDE DE BREVET EUROPEEN

(11) **EP 4 732 650 A1**
(43) Date de publication de la demande: **29.04.2026**
(21) Numéro de dépôt: 25210605.9
(22) Date de dépôt: 23.10.2025
(51) Int. Cl.: A01B 15/08

(54) **ORGANE DE TRAVAIL DU SOL DESTINÉ À ÉQUIPER UNE CHARRUE, ET CHARRUE ÉQUIPÉE D'AU MOINS UN TEL ORGANE DE TRAVAIL DU SOL**

(30) Priorité: 28.10.2024 FR 2411787
(71) Demandeur: Kuhn-Huard S.A.S, 44110 Chateaubriant (FR)
(72) Inventeur: HERAULT, Vincent, 44470 MAUVES SUR LOIRE (FR)
(74) Mandataire: Hager, Esther Evelyne

(57) **Abrégé**

Organe de travail du sol destiné à équiper une charrue et charrue équipée d'au moins un tel organe de travail du sol

La présente invention a pour objet un organe de travail du sol destiné à équiper une charrue, l'organe de travail comprenant une partie avant (1) profilée comportant un bord frontal formant un bord d'attaque (1b), une face travaillante (1a), un bord inférieur (1c) formant avec le bord d'attaque (1b), un angle d'attaque (A), une bande frontale (2) de matériau dur, recouvrant le bord d'attaque (1b) sur une longueur de recouvrement prédéterminée pour protéger le bord d'attaque (1b) de l'usure.

Il se caractérise en ce que la partie avant (1) comprend en outre une zone latérale à relief (3) de matériau dur recouvrant l'angle d'attaque (A) sur une surface prédéterminée de la face travaillante (1a) pour protéger l'angle d'attaque (A) de l'usure. L'invention a également pour objet une charrue équipée d'au moins un tel organe de travail du sol.

## Description

La présente invention concerne le domaine des machines agricoles, plus particulièrement les outils de travail du sol utilisés pour le labour et destinés à équipés une charrue. Elle a pour objet un organe de travail du sol, plus particulièrement destiné à équiper une charrue. Elle a également pour objet une charrue équipée d'au moins un tel organe de travail du sol.

Lors du travail du sol, ce sont les pièces (ou organes ou outils) de travail du sol, en contact avec le sol qui s'usent par frottement et la qualité du travail est directement dépendante de l'état de ces pièces. On sait que le travail du sol est essentiel pour préparer un champ et optimiser le rendement des cultures et que la nature du sol et les conditions de travail auront un impact direct sur la longévité de ces pièces de travail du sol, appelées également dans la présente demande pièces travaillantes. Le remplacement régulier des pièces travaillantes usées est essentiel pour maintenir l'efficacité du travail du sol. Equipées de pièces travaillantes neuves, les performances de la machine sont retrouvées. Souvent, le coût de ces pièces de rechange représente une part considérable des frais pour l'utilisateur.

Le labour est une technique de travail du sol qui consiste à découper la terre en une ou plusieurs bandes et à la retourner. Une charrue comporte un bâti qui porte des corps de labour, notamment au moyen d'age respectif. Le corps de labour comprend traditionnellement un support appelé le sep sur lequel sont fixés notamment le soc et le versoir. Le soc va découper horizontalement la bande de terre puis le versoir va soulever la bande de terre pour la retourner. Le soc est une lame d'acier avec un bord tranchant pour couper et le versoir est une lame métallique courbée vers l'extérieur pour accompagner la bande de terre dans son retournement. Ainsi le soc et le versoir sont soumis à une usure importante en raison du frottement contre le sol.

Le bâti de la charrue peut également porter des pièces travaillantes complémentaires des corps de labour telles que des rasettes. Une rasette est composée d'un petit soc et d'un petit versoir (par comparaison avec le versoir du corps de labour) et est installée à l'avant du corps de labour.

Sur une charrue utilisée pour labourer les champs, les pièces travaillantes sont donc, par exemple, le corps de labour, la rasette ou une pièce travaillante, telle qu'une pointe, un soc, un versoir ou une étrave, formant une partie, généralement démontable (ou amovible), d'un corps de labour ou d'une rasette.

La qualité de travail est dépendante de l'état de ces pièces travaillantes et celles-ci, du fait de leur usure/abrasion par leur contact avec le sol, doivent être remplacées régulièrement, ce qui occasionne des frais de maintenance élevés. Il est connu de recharger les pièces travaillantes usées pour les utiliser plus longtemps, mais un rechargement par soudage a pour inconvénient de fortement chauffer la pièce travaillante et donc de la déformer. L'utilisation de pièces travaillantes déformées va détériorer la qualité de travail en impactant aussi la productivité.

Pour conserver la forme et les dimensions des pièces travaillantes tout au long de leur usure, il est connu d'utiliser des pièces travaillantes dotées de plaquettes en carbure s'insérant dans l'épaisseur de base de la pièce travaillante, voire en dépassant de cette épaisseur. Toutefois, le coût de ces pièces travaillantes est élevé puisqu'elles subissent plusieurs opérations telles que l'usinage du siège destiné à recevoir des plaquettes, le brasage des plaquettes et avec, éventuellement, un traitement thermique. Ce processus de fixation des plaquettes nécessite une pièce travaillante en acier d'une épaisseur plus importante que celle d'une pièce travaillante en acier ordinaire. Ce surplus d'épaisseur va augmenter le poids de la pièce travaillante et donc le poids total de la charrue qui sera équipée de plusieurs de ces pièces travaillantes. D'autre part, les chocs avec les cailloux ou les roches peuvent détériorer ces plaquettes en carbure et provoquer un dommage, voire une rupture prématurée de la pièce travaillante. L'utilisation de plaquettes en carbure n'est donc pas recommandée dans des sols avec une forte présence de pierres. En outre, la présence de plaquettes en carbure sur la face travaillante d'une pièce travaillante, plus particulièrement la face travaillante d'un versoir, ne permet pas de protéger suffisamment les zones exposées telles que le bord d'attaque, voire une arête du bord d'attaque. Une difficulté supplémentaire réside encore dans la fixation de ces plaquettes sur un profil courbe, non droit d'une pièce travaillante et notamment de sa face latérale travaillante prolongeant le bord d'attaque vers l'arrière de la pièce travaillante.

La présente invention a pour but de pallier ces inconvénients en proposant un organe de travail du sol plus économique et avec une longévité accrue quelles que soient les conditions d'utilisation, c'est-à-dire aussi bien dans des sols sableux que des terres comportant des cailloux ou des roches.

L'organe de travail du sol, selon la présente invention, destiné à équiper une charrue, l'organe de travail comprenant une partie avant profilée, de préférence réalisée à partir d'un matériau de base métallique, comportant un bord frontal formant un bord d'attaque permettant de réaliser une découpe verticale du sol, une face travaillante, un bord inférieur formant, avec le bord d'attaque, un angle d'attaque, une bande frontale de matériau dur, recouvrant le bord d'attaque sur une longueur de recouvrement prédéterminée pour protéger le bord d'attaque de l'usure, caractérisé en ce que la partie avant comprend en outre une zone latérale à relief de matériau dur recouvrant l'angle d'attaque sur une surface prédéterminée de la face travaillante pour protéger l'angle d'attaque de l'usure. De préférence la bande frontale de matériau dur consiste en au moins un cordon de matériau, du type cordon de soudure, provenant de la fusion du matériau de base de la partie avant profilée avec au moins un matériau d'apport, par exemple du carbure de tungstène.

La présente invention a également pour objet une charrue équipée d'au moins un organe de travail. Le ou au moins l'un des organe(s) de travail est un organe de travail du sol selon la présente invention et consiste en :
- un corps de labour, ou une rasette, comprenant un versoir avec ou sans étrave, la partie avant profilée de l'organe de travail étant alors formée par la partie avant du versoir ou de l'étrave, ou
- un versoir, avec ou sans étrave, la partie avant profilée de l'organe de travail étant alors formée par la partie avant du versoir ou de l'étrave, ou
- une étrave, la partie avant profilée de l'organe de travail étant alors formée par la partie avant de l'étrave.

L'invention sera mieux comprise, grâce à la description ci-après, qui se rapporte à un au moins un mode de réalisation préféré, donné à titre d'exemple non limitatif, et expliqué avec référence aux dessins schématiques annexés, dans lesquels :
[Fig. 1] est une vue en perspective d'un organe de travail selon la présente invention du type corps de labour sans étrave,
[Fig. 2] est une vue en perspective d'un organe de travail selon la présente invention du type corps de labour avec étrave,
[Fig. 3] est une vue de profil schématique d'une étrave selon la présente invention,
[Fig. 4] est une vue en coupe du détail D-D de l'étrave représentée sur la figure 3,
[Fig. 5] est une vue en coupe du détail C-C de l'étrave représentée sur la figure 3,
[Fig. 6] est une vue de profil de la zone latérale à relief de matériau dur,
[Fig. 7] est une vue en coupe du détail B-B de la zone latérale à relief de matériau dur représentée sur la figure 6,
[Fig. 8] est une vue en perspective de l'étrave représentée sur la figure 3,
[Fig. 9] est une vue en perspective de l'étrave représentée sur la figure 3, dans une autre orientation de l'étrave,
[Fig. 10] est une vue en perspective d'un organe de travail selon la présente invention du type rasette.
[Fig. 11] est une vue de profil de la zone latérale à relief de matériau dur dans une variante.

Les figures annexées montrent, pour certaines entièrement et pour d'autres partiellement, un organe de travail du sol, selon la présente invention, plus particulièrement destiné à équiper une charrue. L'organe de travail comprend une partie avant 1 profilée comportant un bord d'attaque 1b permettant de réaliser une découpe verticale du sol, une face travaillante 1a et un bord inférieur 1c formant avec le bord d'attaque 1b un angle d'attaque A.

La face travaillante 1a, notamment d'un organe de travail du type corps de labour C, rasette R, versoir V, V1 ou étrave E, correspond plus particulièrement à la face (latérale) sur laquelle glisse (de bas en haut) la bande de terre découpée pour être retournée. La face travaillante 1a présente une forme particulière avec une courbure destinée à retourner la bande de terre.

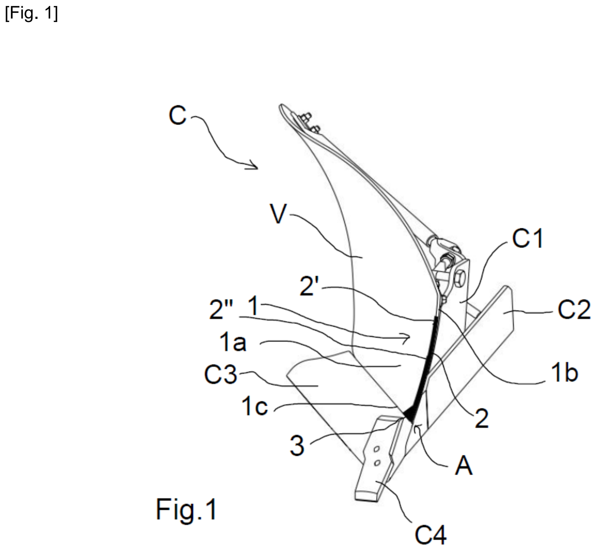

La figure 1 représente un corps de labour C destiné à équiper une charrue (non représentée). Le corps de labour C est un exemple d'organe de travail du sol selon la présente invention. Le corps de labour C comprend un sep C1 ayant une fonction de support sur lequel sont fixés notamment un soc C3 et un versoir V. Le corps de labour C est plus généralement composé par des éléments travaillants par exemple le soc C3, le versoir V et par des éléments de liaison tel qu'un sep C1. Le soc C3 a pour fonction de découper horizontalement une bande de terre à la profondeur requise. Il forme la partie inférieure du corps de labour C. Le soc C3 est prolongé vers l'arrière par le versoir V qui est la partie du corps de labour C qui soulève la bande de terre et la retourne. Dans ce but, le soc C3 est fixé devant le versoir V dans une position oblique et transversale par rapport au sens de l'avancement. Le soc C3 est une lame d'acier de forme trapézoïdale dont le bord antérieur est tranchant de façon à découper horizontalement la bande de terre. Pour permettre une meilleure pénétration du soc C3 dans le sol, il peut être équipé d'une pointe C4. La pointe C4 peut être fixée directement sur le soc C3 et constituer une pièce d'usure pour le soc C3 et donc pour le corps de labour C.

Le versoir V est une lame métallique courbée vers l'extérieur pour permettre de soulever la bande de terre découpée et de l'accompagner dans son retournement. Le versoir V est fixé sur le sep C1 de manière à prolonger le soc C3 vers le haut et vers l'arrière. Le versoir V est d'ordinaire de taille plus importante que le soc C3. Le versoir V comporte dans sa partie avant 1 un bord d'attaque 1b destiné à trancher verticalement la bande de terre à retourner. Sous l'effet de l'avancement du corps de labour C dans le sol, ses pièces travaillantes pratiquent deux découpes : une découpe verticale réalisée par le versoir V et une découpe horizontale réalisée à la profondeur requise par le soc C3. La bande de terre ainsi détachée est entraînée sur le versoir V pour être soulevée et renversée dans la raie créée par le corps de labour précédent. De ces deux découpes résultent une raie de labour délimitée par une paroi verticale qui forme la muraille et un fond de raie horizontal. L'action du corps de labour C crée donc un sillon formé d'une raie ouverte et d'une bande de terre retournée qui s'appuie plus ou moins sur la bande de terre précédente.

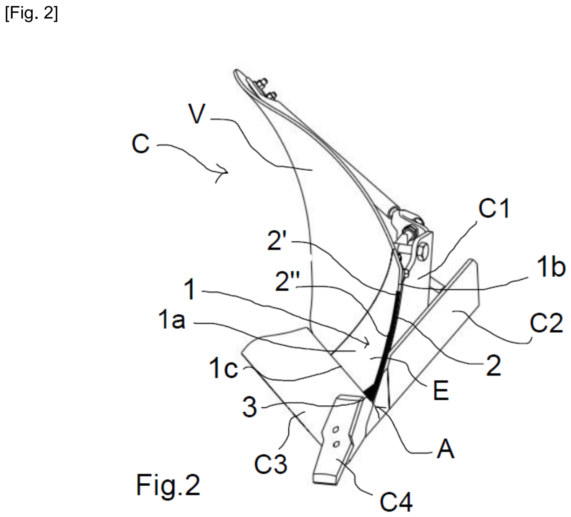

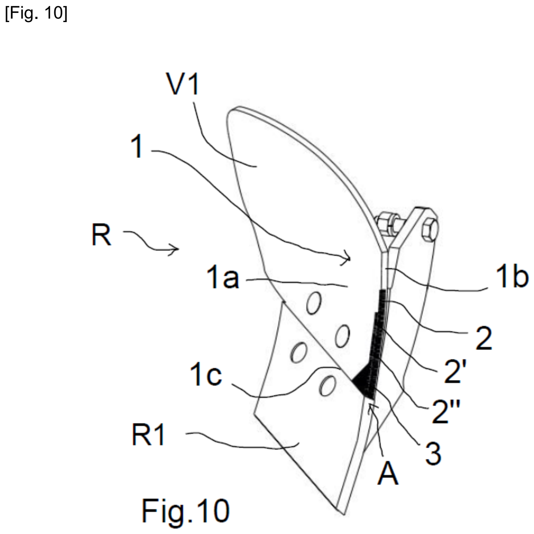

Pour permettre de s'adapter aux différents types de sol et à l'humidité de la terre au moment du labour, il existe de multiples formes de versoir. Les versoirs peuvent être plus ou moins longs, hauts et courbés. Les figures 1 et 2 illustrent un versoir V qui équipe un corps de labour C alors que la figure 10 illustre le versoir V1 d'une rasette R. Le versoir V1 de la rasette R est un organe de travail du sol de plus petite taille.

Tel que visible sur la figure 10, la rasette R se compose d'un soc R1 et d'un versoir V1 et est destinée à équiper une charrue. La rasette R comporte également un sep servant de support au soc R1 et au versoir V1. La rasette R va effectuer un travail avant le passage du corps de labour C. Le fonctionnement de la rasette R est similaire à celui du corps de labour C. Elle va pénétrer dans le sol sur quelques centimètres dans le but d'enfuir les résidus végétaux. Le versoir V1 de rasette R va fonctionner comme un petit versoir, en comparaison avec le versoir V du corps de labour C de plus grandes dimensions. Le versoir V1 va soulever et renverser la (fine) couche supérieure du sol recouverte de mauvaises herbes ou résidus de culture, en l'envoyant sur le côté. Le soc R1 de la rasette R joue un rôle similaire à celui du soc C3 d'un corps de labour C, mais à une échelle réduite et pour une découpe plus en surface. La rasette R se monte comme un équipement complémentaire du corps du labour C.

D'une manière avantageuse, le corps de labour C comporte également un contre-sep C2 qui évite au sep C1 de frotter contre la muraille. Le contre-sep C2 peut être considéré comme une pièce d'usure, il est fixé sur le sep C1 au moyen de boulon. Le contre-sep C2 protège le sep C1 et l'étançon du corps de labour C. Le contre-sep C2 stabilise la charrue par frottement sur la muraille du labour.

Plus particulièrement, le versoir V de la figure 1 peut constituer un organe de travail du sol selon l'invention puisqu'il comprend une partie avant 1, un bord d'attaque 1b, une face travaillante 1a et un angle d'attaque A. Le bord inférieur 1c du versoir V est en contact avec le soc C3. Plus particulièrement le bord inférieur 1c est en contact avec le bord opposé au bord antérieur tranchant du soc C3. Ce contact permet une transition lisse entre le soc C3 et le versoir V. La face destinée à être en contact avec la terre est la face travaillante 1a du versoir V. La bande de terre va glisser sur cette face travaillante pour être finalement retourner. En l'absence de coutre, c'est la partie avant du versoir V au moyen de son bord d'attaque 1b qui va trancher verticalement la bande de terre. Un coutre est un équipement complémentaire du corps de labour C qui, placé à l'avant de celui-ci, réalise une action de coupe verticale. Le coutre est généralement placé devant le bord frontal 1b du versoir V.

Lors du travail du corps de labour C dans la terre, l'usure se produit par le frottement des agrégats plus ou moins abrasifs comme le sable, la silice et la présence de pierres. En présence de sols secs et compacts, l'usure au contact de la terre peut également être importante pour les organes de travail du sol. Dans le cas d'un versoir V, l'usure sera prononcée au niveau de l'angle d'attaque A, dans la partie antérieure du versoir V.

Pour éviter de devoir remplacer le versoir V dans son intégralité alors que la partie arrière est encore en bon état, le versoir V peut être constitué de deux parties. La partie antérieure du versoir V peut être démontable. Cette partie antérieure peut être une étrave E. L'étrave E est une pièce amovible qui protège l'avant du versoir V. Dit autrement, une telle étrave E formant la partie avant 1 du corps de labour C peut être montée, de préférence de façon démontable, à l'avant du versoir V dans sa continuité.

La figure 2 représente un corps de labour C comportant un versoir V en deux parties, dont la partie démontable avant constitue une étrave E. De tels corps de labour C sont utilisés sur une charrue qui va travailler dans des sols particulièrement abrasifs, puisque l'étrave E pourra être remplacée plusieurs fois avant de remplacer le versoir V. L'étrave E est disposée dans la zone d'usure principale du versoir V et va le protéger et augmenter sa longévité. Dans cette réalisation, c'est l'étrave E qui comporte le bord d'attaque 1b destiné à trancher verticalement la bande de terre.

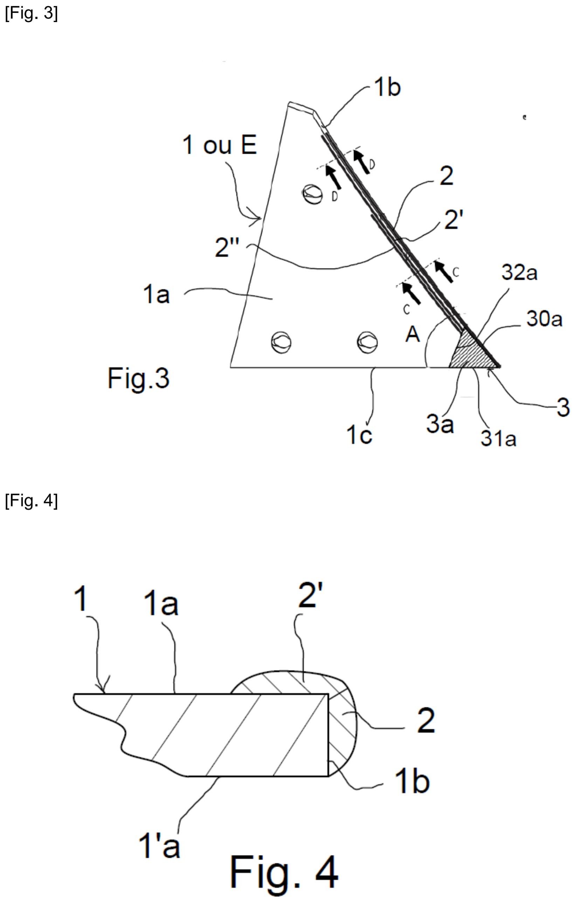

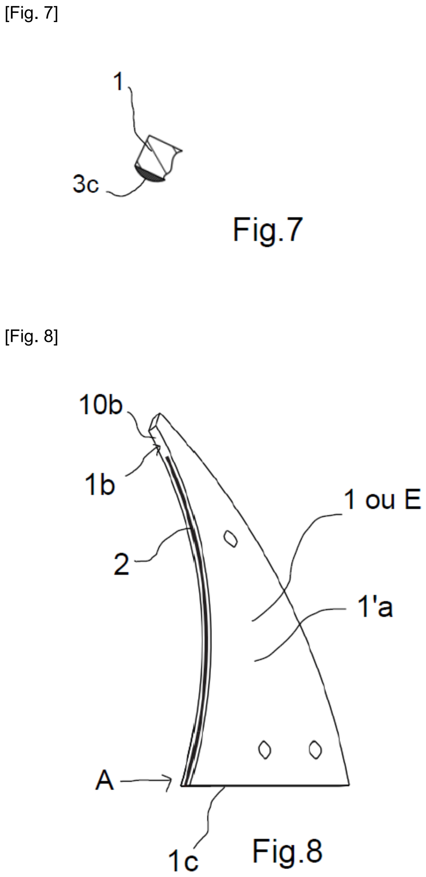

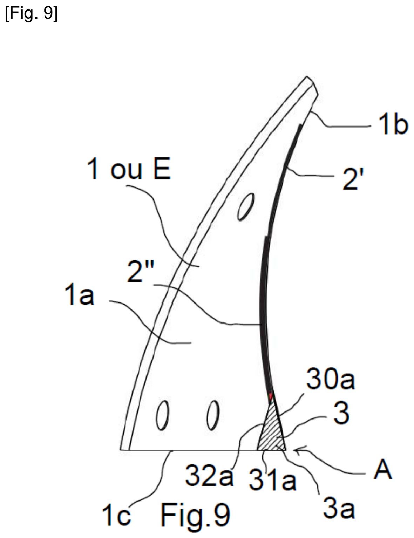

L'organe de travail du sol selon l'invention peut être constitué par l'étrave E elle-même qui comprend une partie avant 1, un bord d'attaque 1b, une face travaillante et un angle d'attaque A. La figure 3 représente une vue de profil et les figures 8 et 9 sont des vues en perspective d'une étrave E.

Pour réaliser le retournement de la bande de terre, le versoir V est courbé vers l'extérieur, c'est-à-dire que la courbure du versoir V est telle que la bande de terre est retournée en s'éloignant du sep C1. Les figures 1 et 2 illustrent un versoir V de forme cylindrique qui se termine avec une hélice prononcée favorisant le retournement de la bande de terre. Un versoir cylindrique est agressif puisqu'il permet de casser les mottes de terre. Avec une vitesse de labour élevée et un versoir creux, l'action d'émiettement de la bande de terre est accentuée. Par sa forme générale cylindrique, la partie avant 1 et notamment le bord d'attaque 1b du versoir V sont courbés. De la même manière, l'étrave E disposée à l'avant du versoir V présente une forme générale cylindrique. Cette courbure est particulièrement visible sur les figures 8 et 9. La courbure du bord d'attaque 1b peut être plus ou moins prononcée en fonction de la forme du versoir V. L'émiettement de la bande de terre sera limité avec un versoir hélicoïdal car le labour s'effectuera à une vitesse limitée et une faible profondeur. Le versoir universel, généralement plus court, comporte une partie postérieure hélicoïdale et une partie antérieure cylindrique.

Selon l'invention, l'organe de travail du sol peut consister en :
- un corps de labour C (figures 1 et 2), ou une rasette R (figure 10), comprenant un versoir V, V1 avec ou sans étrave E, la partie avant profilée 1 de l'organe de travail étant alors être formée par la partie avant 1 du versoir V, V1 ou de l'étrave E, ou
- un versoir V, V1 avec ou sans étrave E, la partie avant 1 profilée de l'organe de travail étant alors formée par la partie avant du versoir V, V1 (figure 1) ou de l'étrave E (figures 2, 3, 8, 9). On comprend qu'un tel versoir V, V1, ou une telle étrave E, peut équiper (ou faire partie de) un corps de labour C (figures 1 et 2) ou une rasette R (figure 10), ou
- une étrave E (figures 2, 3, 8, 9), la partie avant 1 profilée de l'organe de travail étant alors formée par la partie avant 1 de l'étrave E. On comprend qu'une telle étrave peut équiper, par exemple, un corps de labour C, notamment un versoir V de corps de labour C (figure 2).

On comprend que l'organe de travail selon la présente invention peut être soit un organe complet tel qu'un corps de labour C (figures 1 et 2) ou une rasette R, soit une partie/pièce d'usure de cet organe complet comprenant la partie avant 1 profilée et le bord d'attaque 1b.

Conformément à l'invention, l'organe de travail du sol comprend en outre une bande frontale 2 de matériau dur, de préférence continue, recouvrant le bord d'attaque 1b sur une longueur de recouvrement prédéterminée pour le protéger de l'usure. Grâce à cette caractéristique, la résistance à l'usure du bord d'attaque 1b est augmentée (ou renforcée) et l'organe de travail sera sujet à une usure moins rapide et moins importante. La longévité du bord d'attaque 1b et donc de l'organe de travail sera augmentée. La découpe verticale de la partie avant 1 de l'organe de travail restera nette et efficace sur un nombre d'hectares plus élevé.

De préférence la bande frontale 2 consiste en au moins un cordon de matériau, du type cordon de soudure, provenant de la fusion du matériau de base de la partie avant 1 profilée avec au moins un matériau d'apport, par exemple du carbure de tungstène.

Le bord d'attaque 1b ainsi revêtu d'un matériau dur aura une durée de vie plus élevée. Le matériau dur est un matériau de protection anti-usure, c'est à dire un matériau résistant à l'usure. Le matériau dur peut être un alliage à haute dureté, par exemple à base de fonte au chrome, d'acier au bore ou de carbure de tungstène. Dotée de la bande frontale 2 de matériau dur, la dureté du bord d'attaque 1b sera ainsi augmentée et par conséquent la longévité de l'organe de travail sera augmentée.

La bande frontale 2 de matériau dur recouvre ainsi le bord d'attaque 1b sur une longueur prédéterminée en formant une surépaisseur sur le bord d'attaque 1b, c'est-à-dire sur la surface externe (ou frontale) du bord d'attaque 1b. La bande frontale 2 peut être en retrait d'au moins l'une des deux arêtes externe et interne du bord d'attaque 1b. De préférence, la bande frontale 2 peut s'étendre en largeur jusqu'aux arrêtes, au moins jusqu'à l'arrête externe du bord d'attaque 1b.

D'une manière générale, la partie avant 1 profilée de l'organe de travail du sol comprend deux faces latérales 1a, 1'a opposées, dont l'une forme la face travaillante 1a. L'autre face 1'a opposée peut former une face de fixation 1'a. Ces deux faces latérales 1a, 1'a prolongent latéralement et de manière continue le bord d'attaque 1b vers l'arrière. La face travaillante 1a est destinée à venir en contact avec la terre alors que la face de fixation 1'a est en contact avec le sep C1.

De préférence, la partie avant 1 profilée peut être réalisée à partir d'un matériau de base métallique, préférentiellement de l'acier, plus préférentiellement de l'acier trempé ou allié. D'une manière avantageuse, le versoir V, V1, ou l'étrave E, peut être formé de trois couches d'acier superposées pour résister à la fois à l'usure, à la déformation et aux chocs. La face travaillante 1a est donc la face latérale de l'organe de travail qui est en contact avec la terre de façon prédominante et qui est par conséquent soumise à une usure importante en raison de son contact et frottement avec le sol.

Sur la figure 3 est représentée le profil d'une étrave E dont une partie du bord d'attaque 1b est recouvert d'une bande frontale 2 de matériau dur. La bande frontale 2 est également visible sur la perspective de la figure 8. La bande frontale 2 recouvre le bord d'attaque 1b depuis le coin inférieur, au niveau de l'angle d'attaque A, jusqu'à son extrémité supérieure. La bande frontale 2 recouvre presque la totalité de la longueur du bord d'attaque 1b. De préférence, la bande frontale 2 peut recouvrir plus de 65% de la longueur du bord d'attaque 1b. Plus préférentiellement, la bande frontale 2 peut recouvrir plus de 80% de la longueur du bord d'attaque 1b. Selon un exemple de réalisation non représenté, la bande frontale 2 recouvre le bord d'attaque 1b dans son intégralité.

La partie avant 1 profilée de l'organe de travail est formée par la partie antérieure du versoir V, V1 (sans étrave) (figures 1, 10) ou de l'étrave E (figures 2, 3, 8, 9). La partie avant 1 comprend le bord d'attaque 1b qui va accomplir la découpe verticale du sol. Lors du labour certaines zones de cette partie avant 1 de l'organe de travail subiront une usure plus importante que d'autres à cause du frottement de la terre. Une zone d'usure plus importante est par exemple le bord d'attaque 1b, la face travaillante 1a, la zone adjacente au bord d'attaque 1b ou la zone de l'angle d'attaque A. Ces zones, en contact avec le sol, sont fortement soumis à l'usure, notamment par abrasion.

La présente invention s'intéresse donc plus particulièrement à la protection des zones suivantes : en premier lieu le bord d'attaque 1, l'arête externe du bord d'attaque 1b puis la zone latérale adjacente au bord d'attaque 1b (c'est-à-dire à l'arête externe du bord d'attaque 1b) et la zone de l'angle d'attaque A sur la face travaillante 1a. La présente invention permet de répondre au problème d'usure d'au moins une partie de l'organe de travail, notamment dans la zone du bord d'attaque 1 ou une zone autour du bord d'attaque 1.

Le bord d'attaque 1b peut comporter latéralement, comme c'est généralement le cas dans un corps de labour C ou une rasette R, deux arêtes externe et interne. L'arête externe forme une ligne d'intersection entre la face frontale du bord d'attaque 1b et la face travaillante 1a. L'arête interne forme une ligne d'intersection entre la face frontale du bord d'attaque 1b et la face de fixation, 1a'.

De préférence, comme on peut le voir sur les figures 1, 2, 3, 6, 7, 9, 10, 11, la partie avant 1 profilée peut comprendre en outre une zone latérale à relief 3 de matériau dur recouvrant l'angle d'attaque A sur une surface prédéterminée de la face travaillante 1a de la partie avant 1 profilée. Cette zone latérale à relief 3 de matériau dur permet de protéger l'angle d'attaque A de l'usure. De préférence, comme on peut le voir sur ces figures, la surface prédéterminée est la surface de la face travaillante 1a au niveau de son coin inférieur avant. L'usure est particulièrement importante au niveau de cette zone proche de l'angle d'attaque A ainsi le revêtement de cette zone avec du matériau dur améliore considérablement la durée de vie de cet organe de travail.

De préférence, la zone latérale à relief 3 de matériau dur peut comprendre un relief principal 3a, de préférence continu, de matériau dur. De préférence, le relief 3a principal peut présenter un profil polygonal, de préférence un profil triangulaire. Le profil avec plusieurs côtés tel que représenté notamment les figures 3, 6, 9 est avantageusement triangulaire. De préférence, le relief 3a principal peut s'étendre jusqu'au niveau du sommet de l'angle d'attaque A (ou coin inférieur avant de la face travaillante 1a), offrant ainsi une protection renforcée à cette zone exposée.

Dans une forme préférentielle, comme on peut le voir notamment sur les figures 3, 6, 9 et 11, le relief principal 3a peut présenter un profil en forme de triangle isocèle comportant un premier côté 30a s'étendant parallèlement et au niveau, ou immédiatement à côté, du bord d'attaque 1b, un deuxième côté 31a s'étendant parallèlement et au niveau, ou immédiatement à côté, du bord inférieur 1c de la partie avant 1 profilée et une base 32a reliant les premier et deuxième côtés 30a, 31a. Cette configuration triangulaire permet une protection efficace de la zone de l'angle d'attaque A contre l'usure. D'une manière préférentielle, la zone latérale à relief 3, plus particulièrement le relief principal 3a, est en contact avec une partie de la bande frontale 2 recouvrant le bord d'attaque 1b.

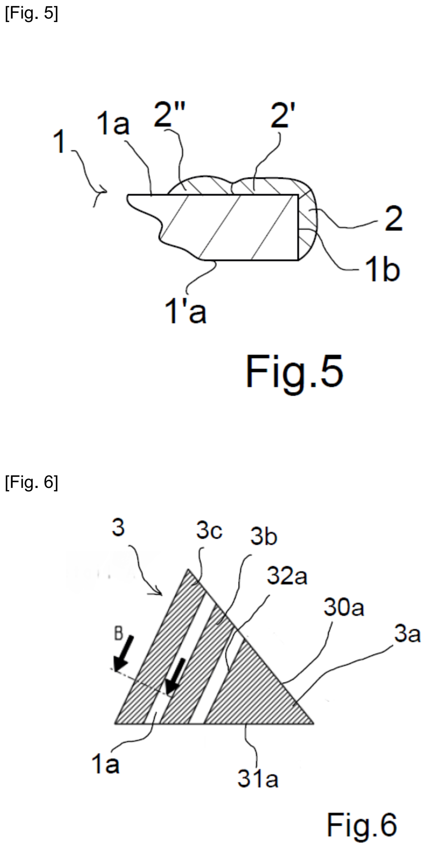

De préférence, comme on peut le voir notamment sur les figures 6, 7 et 11, la zone latérale à relief 3 peut comprendre en outre au moins un relief additionnel 3b, 3c, de préférence continu, de matériau dur, de préférence de forme allongée. De préférence, le(s) relief(s) additionnel(s) 3b, 3c peuvent être séparé(s) entre eux et/ou du relief principal 3a. Une séparation permet d'économiser du matériau dur tout en conservant une étendue de protection surfacique importante dans la zone de l'angle d'attaque A. De préférence, le ou chaque relief additionnel 3b, 3c peut s'étendre parallèlement à la base du relief principal 3a. Chaque relief additionnel 3b, 3c offre une protection supplémentaire de cette zone de la partie avant 1 profilée contre l'usure. Avec une surface de matériau dur augmentée grâce à l'ajout de relief additionnel 3b, 3c, l'usure dans la zone de l'angle d'attaque A peut être limitée.

Chaque relief additionnel 3b, 3c est par exemple une bande de matériau dur, le matériau dur peut être préférentiellement identique à celui de la bande frontale 2. Le relief additionnel 3b peut être apposé directement ou à distance de la base 32a du relief principal 3a. Le relief additionnel 3c peut être apposé directement ou à distance du relief additionnel 3b.

Selon une caractéristique préférentielle, le ou chaque relief additionnel 3b, 3c, peut s'étendre suivant un axe incliné par rapport au bord d'attaque 1b. De préférence, cet axe incliné est parallèle ou sensiblement parallèle à la base 32 du relief principale 3a triangulaire. Cette inclinaison du ou de chaque relief additionnel 3b, 3c permet d'obtenir un profil de protection plus important entre le bord inférieur 1c et le bord d'attaque 1b.

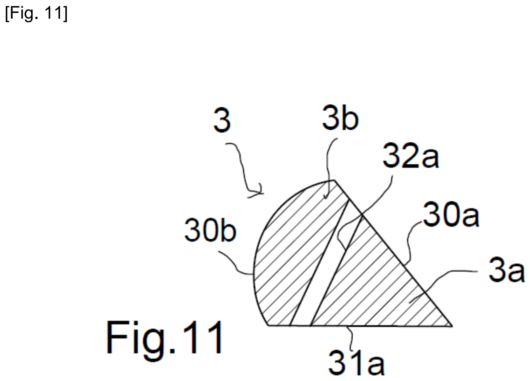

Le relief principal 3a et/ou le ou au moins l'un des relief(s) additionnel(s) 3b, 3c peut comprendre un côté 30b arrondi ou convexe (figure 11). Ce côté 30b arrondi ou convexe peut être, par exemple, le côté formant la base du relief principal 3a en forme de triangle, notamment de triangle isocèle. Dans l'exemple représenté sur la figure 11, la zone latérale à relief 3 comprend un relief principal 3a et un seul relief additionnel 3b. Le relief additionnel 3b est doté d'un côté 30b arrondi. Ce relief additionnel 3b est délimité latéralement par un côté avant, le plus proche du sommet de l'angle d'attaque A, et un côté arrière. Le côté arrière est opposé au côté avant. De préférence, le côté 30b arrondi peut être le côté arrière du relief additionnel 3b. Le côté 30b arrondi permet avantageusement d'augmenter l'étendue de protection au niveau de l'angle d'attaque A.

Grâce à la zone latérale à relief 3, la zone latérale de l'angle d'attaque A située sur la face travaillante 1a aura, ainsi recouverte de matériau dur, une plus grande résistance à l'usure et donc une plus grande durée de vie. La zone de l'angle d'attaque A est formée par la zone entre le bord d'attaque 1b et le bord inférieur 1c, c'est-à-dire au niveau du coin inférieur avant de la face travaillante 1a.

D'une manière particulièrement avantageuse, comme on peut le voir sur les figures 1, 2, 3, 4, 5, 9, 10, 11, la partie avant 1 profilée peut comprendre en outre une bande latérale principale 2', de préférence continue, de matériau dur s'étendant sur la face travaillante 1a de la partie avant 1. La bande latérale principale 2' est adjacente au bord d'attaque 1b et parallèle à la bande frontale 2. Eventuellement, la bande latérale principale 2' peut être en contact avec la bande frontale 2, notamment au niveau de l'arête externe du bord d'attaque 1b afin d'obtenir une épaisseur de matériau dur au niveau de l'arête externe assurant une bonne protection contre l'usure (voir notamment les figures 4 et 5). Dans une forme particulière, la bande latérale principale 2' peut être en contact avec la bande frontale 2, éventuellement avec un chevauchement l'une sur l'autre. La partie avant 1 peut comprend en outre une bande de recouvrement de matériau dur chevauchant la bande latérale principale 2' et la bande frontale 2. Une telle bande de recouvrement peut être considérée comme formant une partie de la bande latérale principale 2' et/ou de la bande frontale 2. De préférence, la bande latérale principale 2' peut débuter au niveau de l'angle d'attaque A, c'est-à-dire au niveau du bord inférieur du versoir V, V1 ou de l'étrave E ou au niveau de la zone latérale à relief 3. De préférence, la longueur de recouvrement de la bande latérale principale 2' peut être identique ou inférieure à la longueur du bord d'attaque 1b et/ou à la longueur de recouvrement de la bande frontale 2. Les figures 1, 2, 3, 9 et 10 montrent plus particulièrement une forme de réalisation où la longueur de recouvrement de la bande latérale principale 2' est inférieure à la longueur du bord d'attaque 1b et à la longueur de recouvrement de la bande frontale 2. On peut voir également sur ces figures que la bande latérale principale 2' peut s'étendre jusqu'à la zone latérale à relief 3. On peut encore voir, notamment sur les figures 3 et 9, que la bande latérale principale 2' peut s'étendre depuis la zone latérale à relief 3 jusqu'au niveau de l'extrémité supérieure de la bande frontale 2, ce qui permet de protéger contre l'usure la zone de la face travaillante 1a adjacente au bord d'attaque 1b, depuis la zone de l'angle d'attaque A sensiblement jusqu'au niveau de l'extrémité supérieure du bord d'attaque 1b.

Cette bande latérale principale 2' permet ainsi d'améliorer la longévité de la zone adjacente à l'angle d'attaque A, et le cas échéant de son arête externe. On obtiendra une très bonne protection contre l'usure de l'arête externe grâce au matériau dur constituant la bande frontale 2 et celui de la bande latérale principale 2'. Grâce à la bande frontale 2 au niveau du bord d'attaque 1b et la bande latérale principale 2' proche ou à côté du bord d'attaque 1b, la longévité de l'organe de travail est augmentée.

Selon une caractéristique additionnelle, tel que visible sur les figures 1, 2, 3, 4, 5, 9, 10, la partie avant 1 peut comprendre en outre une bande latérale additionnelle 2", de préférence continue, de matériau dur s'étendant sur la face travaillante 1a de la partie avant 1. La bande latérale additionnelle 2" est adjacente et parallèle à la bande latérale principale 2'. La bande latérale principale 2' s'étend entre la bande latérale additionnelle 2" et le bord d'attaque 1b ou la bande frontale 2 recouvrant le bord d'attaque 1b. Eventuellement, la bande latérale additionnelle 2" est en contact avec la bande latérale principale 2', éventuellement avec un chevauchement l'une sur l'autre. Une telle bande latérale additionnelle 2" permet de renforcer davantage la protection de cette zone adjacente au bord d'attaque 1b contre l'usure.

De préférence, comme on peut le voir notamment sur les figures 1, 2, 3, 9 et 10, la longueur de recouvrement de la bande latérale additionnelle 2" peut être inférieure à celle de la bande latérale 2' principale. On peut voir encore sur ces figures que la bande latérale additionnelle 2" peut s'étendre jusqu'à la zone latérale à relief 3. Selon un mode non représenté, la longueur de recouvrement de la bande latérale additionnelle 2" peut être identique à la longueur de recouvrement de la bande latérale 2' principale.

Les bandes latérales principale et additionnelle 2', 2" et le relief 3a principal offrent ainsi une protection optimisée dans cette zone latérale adjacente au bord d'attaque 1b depuis l'angle d'attaque A. Ces bandes 2', 2" comme la bande frontale 2 de matériau dur sont avantageusement étroites. Chaque bande de matériau dur est continue, c'est-à-dire que la bande forme un cordon continu sur l'organe de travail du sol. Dans une alternative non représentée, l'une ou plusieurs des bandes de matériau dur est discontinue, c'est-à-dire que la bande forme un cordon discontinu sur l'organe de travail du sol.

De préférence, la surface de la bande frontale 2 et/ou de la zone latérale à relief 3 (c'est-à-dire la surface du relief 3a et/ou du ou de chaque relief additionnel 3b, 3c) et/ou de la bande latérale principale 2' et/ou de la bande latérale additionnelle 2" peut être convexe, arrondie ou plane voire sensiblement plane (voir notamment les figures 4, 5, 7).

La longueur de recouvrement définie plus haut fait référence à la portion de la surface du bord d'attaque 1b ou de la face travaillante 1a de la partie avant 1 profilée qui est effectivement recouverte par la bande frontale, latérale ou additionnelle 2, 2', 2". Cette longueur peut être égale à la longueur de la bande frontale, latérale ou additionnelle 2, 2', 2", mais elle peut aussi être différente si la bande frontale, latérale ou additionnelle 2, 2', 2" ne recouvre qu'une partie de la surface, par exemple si elle comporte des plis ou des chevauchements dans sa formation.

Dans une forme de réalisation préférentielle, la bande frontale 2 et/ou la zone latérale à relief 3 et/ou la bande latérale principale 2' et/ou la bande latérale additionnelle 2", peuvent consister chacune en au moins un cordon de matériau, du type cordon de soudure, provenant de la fusion du matériau de base, notamment du métal, de la partie avant profilée 1 de l'organe de travail avec au moins un matériau d'apport, par exemple du carbure de tungstène (ou similaire). De préférence, le ou chaque cordon de matériau peut être réalisé par un procédé de soudure au laser, à l'arc ou au chalumeau. Le matériau apporté/supplémentaire utilisé peut être identique pour la bande frontale 2, la zone latérale à relief 3, la bande latérale principale 2' et la bande latérale additionnelle 2" ou être différent. Ainsi, contrairement à la fonction habituelle de liaison/jonction d'un cordon de soudure, dans la présente demande le ou les cordon(s) de soudure sert/servent à créer au moins une surépaisseur de matériau fusionné dans le matériau de base de la zone correspondante de la partie avant 1 profilée. La soudure au laser est particulièrement avantageuse pour la réalisation d'un cordon de soudure étroit et pour avoir ainsi une petite zone affectée thermiquement. Avec un impact thermique localisé, la structure métallographique de la zone de l'organe de travail recevant le matériau dur n'est modifiée que très localement. De manière très avantageuse, ce procédé permet d'appliquer le matériau dur sous forme de bande sur un organe de travail du sol d'épaisseur normale et sur une face travaillante 1a ou un bord d'attaque 1b avec un profil courbe ou cylindrique.

Le procédé de réalisation par soudure laser peut consister à diriger un faisceau laser sur la surface externe de la zone concernée de la face avant 1 profilée (bord d'attaque 1b, zone adjacente au bord d'attaque 1b, zone de l'angle d'attaque A) où le ou chaque cordon doit être créé selon la longueur, l'étendue de surface et/ou l'épaisseur souhaitée. Grâce au faisceau laser, les bandes peuvent être étroites et régulières, même sur le bord d'attaque 1b qui est courbe. Le pilotage du faisceau laser peut être manuel, ou automatisé en étant programmé, pour suivre une trajectoire définie, par exemple sur ou le long du bord d'attaque 1b ou dans le coin correspondant de l'angle d'attaque A. Le matériau dur, par exemple du carbure de tungstène ou similaire, peut se présenter par exemple sous forme de fil, de baguette ou de poudre et est ajouté à la zone fondue pour créer la surépaisseur formant le cordon. Chaque cordon est réalisé à plat, c'est à dire que la surface concernée de la partie avant 1 profilée est horizontale pour faciliter le dépôt du matériau dur et permettre une bonne répartition du matériau dur. En pratique, il peut être prévu qu'une buse dépose la poudre de carbure de tungstène sur le support juste avant le passage du faisceau laser. Une fois le cordon réalisé, un contrôle visuel ou dimensionnelle (par exemple avec un comparateur tel qu'un pied à coulisse) peut être effectué pour s'assurer de la régularité de la surépaisseur. Si nécessaire, d'autres passages peuvent être effectués pour ajuster l'épaisseur ou la forme du cordon. Un procédé avec un faisceau laser présente plusieurs avantages. Tout d'abord, elle permet une application précise et contrôlée du matériau dur (cordon de soudure), assurant une adhérence optimale et une finition de haute qualité. De plus, l'utilisation du laser minimise les déformations thermiques et les contraintes résiduelles pour maintenir l'intégrité structurelle de l'organe de travail du sol. Enfin, ce procédé est rapide et efficace, réduisant les temps de production et les coûts associés.

On notera que la figure 3 montre schématiquement une séparation entre les différentes bandes frontale et additionnelles 2, 2', 2". Si cette séparation peut être prévue par la présente invention, le dessin schématique montre cette séparation, voire l'accentue volontairement, pour mieux visualiser et distinguer entre elles les bandes frontale et additionnelles 2, 2', 2" et leurs longueurs relatives qui peuvent être différentes comme décrit précédemment. De préférence la bande frontale 2 et les bandes additionnelles 2' et 2"sont jointives et sont réalisées l'une après l'autre.

La présente invention peut prévoir que les différentes bandes frontale et additionnelles 2, 2', 2", la zone latérale à relief 3 (reliefs principal et additionnel(s) 3a, 3b, 3c), ou le ou les cordon(s) de matériau, soient continu(e)s ou discontinu(e)s.

De préférence, l'ensemble composé de la bande frontale 2 et/ou de la zone latérale à relief 3 et/ou de la bande latérale principale 2' et/ou de la bande latérale additionnelle 2" peut s'étendre sur une surface de la partie avant 1 représentant moins de 5% de sa surface totale, de préférence moins de 3%. Cette configuration permet de maximiser la protection contre l'usure avec un poids sensiblement identique. En limitant la surface couverte par les matériaux durs de protection anti-usure, on réduit également le coût de l'organe de travail du sol. Avec un organe de travail selon l'invention, les performances de la charrue sont conservées plus longtemps puisque la longévité est accrue et le matériau dur déposé sous forme de bandes ne craint pas les chocs pour un coût raisonnable. L'impact du matériau dur sur le poids global de la pièce est faible, voire négligeable. L'ajout du matériau dur a pour avantage d'augmenter la dureté et la résistance à l'usure de la zone considérée tout en conservant l'élasticité du support, le support étant la partie de l'organe de travail recevant le matériau dur.

La conception de la partie avant 1 profilée selon la présente invention permet ainsi la réalisation d'un organe de travail du sol adapté pour divers types de charrues, tout en offrant une protection anti-usure efficace et durable de l'organe de travail.

La présente invention offre une solution efficace pour protéger un tel organe de travail du sol contre l'usure, en utilisant des matériaux de protection anti-usure stratégiquement placés sur les zones les plus exposées. Cette protection permet de prolonger la durée de vie de l'organe de travail du sol, et donc d'un équipement agricole par exemple installé sur une charrue, de réduire les coûts de maintenance et d'améliorer l'efficacité des opérations de labour, ainsi que la qualité du travail.

La présente invention a également pour objet une charrue équipée d'au moins un organe de travail. En outre, le ou au moins l'un des organe(s) de travail est un organe de travail du sol selon la présente invention.

Un tel organe de travail du sol et une telle charrue, équipée d'au moins un tel organe de travail du sol selon la présente invention, bénéficient ainsi d'une protection accrue contre l'usure, prolongeant ainsi leur durée de vie et réduisant les coûts de maintenance. La bande frontale 2 et, le cas échéant, les bandes latérales principale et additionnelle(s) 2', 2" et la zone latérale à relief 3 qui forment chacune une surépaisseur de matériau dur sur le bord d'attaque 1b et, le cas échéant sur la face travaillante 1a de la partie avant 1 profilée dans les zones adjacentes au bord d'attaque 1b offrent une protection des zones les plus exposées de l'organe de travail, tel qu'un corps de labour ou une rasette, avec une résistance à l'abrasion et aux impacts supérieure à celle des organes de travail du sol existants.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Organe de travail du sol destiné à équiper une charrue, l'organe de travail comprenant une partie avant (1) profilée, de préférence réalisée à partir d'un matériau de base métallique, comportant un bord frontal formant un bord d'attaque (1b) permettant de réaliser une découpe verticale du sol, une face travaillante (1a), un bord inférieur (1c) formant, avec le bord d'attaque (1b), un angle d'attaque (A), une bande frontale (2) de matériau dur, recouvrant le bord d'attaque (1b) sur une longueur de recouvrement prédéterminée pour protéger le bord d'attaque (1b) de l'usure, **caractérisé en ce que** la partie avant (1) comprend en outre une zone latérale à relief (3) de matériau dur recouvrant l'angle d'attaque (A) sur une surface prédéterminée de la face travaillante (1a) pour protéger l'angle d'attaque (A) de l'usure.

2. Organe de travail du sol selon la revendication 1, **caractérisé en ce que** la zone latérale à relief (3) comprend un relief principal (3a), de préférence continu, de matériau dur présentant un profil polygonal, de préférence un profil triangulaire, de préférence le relief (3a) principal s'étendant jusqu'au niveau du sommet de l'angle d'attaque (A).

3. Organe de travail du sol selon la revendication 2, **caractérisé en ce que** le relief principal (3a) présente un profil en forme de triangle isocèle comportant un premier côté (30a) s'étendant parallèlement et au niveau, ou immédiatement à côté, du bord d'attaque (1b), un deuxième côté (31a) s'étendant parallèlement et au niveau, ou immédiatement à côté, du bord inférieur (1c) de la partie avant (1) et une base (32a) reliant les premier et deuxième côtés (30a, 31a).

4. Organe de travail du sol selon la revendication 2 ou 3, **caractérisé en ce que** la zone latérale à relief (3) comprend en outre au moins un relief additionnel (3b, 3c), de préférence continu, de matériau dur, de préférence de forme allongée (3b, 3c), de préférence le ou chaque relief additionnel (3b, 3c) s'étend suivant un axe incliné par rapport au bord d'attaque (1b), de préférence le(s) relief(s) additionnels (3b, 3c) étant séparé(s) entre eux et/ou du relief principal (3a), de préférence le ou chaque relief additionnel (3b, 3c) s'étend parallèlement à la base du relief (3a) principal.

5. Organe de travail du sol selon l'une quelconque des revendications 1 à 4, **caractérisé en ce que** la partie avant (1) comprend en outre une bande latérale principale (2'), de préférence continue, de matériau dur s'étendant sur la face travaillante (1a) en étant adjacente au bord d'attaque (1b) et parallèle à la bande frontale (2) et, éventuellement, la bande latérale principale (2') étant en contact avec à la bande frontale (2).

6. Organe de travail du sol selon la revendication 5, **caractérisé en ce que** la longueur de recouvrement de la bande latérale principale (2') est identique ou inférieure à la longueur de recouvrement de la bande frontale (2) et/ou à la longueur du bord d'attaque (1b).

7. Organe de travail du sol selon la revendication 5 ou 6, **caractérisé en ce que** la partie avant (1) comprend en outre une bande latérale additionnelle (2"), de préférence continue, de matériau dur s'étendant sur la face travaillante (1a) en étant adjacente et parallèle à la bande latérale principale (2') s'étendant entre la bande latérale additionnelle (2") et le bord d'attaque (1b) et, éventuellement, la bande latérale additionnelle (2") étant en contact avec la bande latérale principale (2').

8. Organe de travail du sol selon la revendication 7, **caractérisé en ce que** la longueur de recouvrement de la bande latérale additionnelle (2") est inférieure à celle de la bande latérale principale (2').

9. Organe de travail du sol selon l'une quelconque des revendications 1 à 8 **caractérisé en ce que** l'ensemble composé de la bande frontale (2) et/ou de la zone latérale à relief (3) et/ou de la bande latérale principale (2') et/ou de la bande latérale additionnelle (2"), s'étend sur une surface de la partie avant (1) représentant moins de 5% de sa surface totale, de préférence moins de 3%.

10. Organe de travail du sol selon l'une quelconque des revendications 1 à 9, **caractérisé en ce qu'**il consiste en :
- un corps de labour (C) ou une rasette (R), comprenant un versoir (V, V1) avec ou sans étrave (E), la partie avant profilée (1) de l'organe de travail étant alors formée par la partie avant du versoir (V) ou de l'étrave (E), ou
- un versoir (V, V1) avec ou sans étrave (E), la partie avant (1) profilée de l'organe de travail étant alors formée par la partie avant du versoir (V, V1) ou de l'étrave (E), ou
- une étrave (E), la partie avant (1) profilée de l'organe de travail étant alors formée par la partie avant de l'étrave (E).

11. Charrue équipée d'au moins un organe de travail, **caractérisée en ce que** le ou au moins l'un des organe(s) de travail est un organe de travail du sol selon la revendication 10.
